(19) **Europäisches Patentamt European Patent Office Office européen des brevets**

(11) **EP 3 699 252 A1**

(12) # EUROPEAN PATENT APPLICATION
published in accordance with Art. 153(4) EPC

(43) Date of publication:
**26.08.2020 Bulletin 2020/35**

(21) Application number: **18868667.9**

(22) Date of filing: **15.10.2018**

(51) Int Cl.:
*C09K 5/04* (2006.01)     *F25B 1/00* (2006.01)

(86) International application number:
**PCT/JP2018/038350**

(87) International publication number:
**WO 2019/078165 (25.04.2019 Gazette 2019/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.10.2017   JP 2017200590**

(71) Applicant: **Daikin Industries, Ltd.**
**Osaka-shi, Osaka 530-8323 (JP)**

(72) Inventors:
 • **OHKUBO, Shun**
  **Osaka-shi**
  **Osaka 530-8323 (JP)**
 • **KARUBE, Daisuke**
  **Osaka-shi**
  **Osaka 530-8323 (JP)**

 • **MIZUNO, Akihito**
  **Osaka-shi**
  **Osaka 530-8323 (JP)**
 • **KUROKI, Hitomi**
  **Osaka-shi**
  **Osaka 530-8323 (JP)**
 • **TAKAHASHI, Kazuhiro**
  **Osaka-shi**
  **Osaka 530-8323 (JP)**
 • **YAMADA, Yasufu**
  **Osaka-shi**
  **Osaka 530-8323 (JP)**
 • **TAKAKUWA, Tatsuya**
  **Osaka-shi**
  **Osaka 530-8323 (JP)**
 • **YOTSUMOTO, Yuuki**
  **Osaka-shi**
  **Osaka 530-8323 (JP)**

(74) Representative: **Hoffmann Eitle**
**Patent- und Rechtsanwälte PartmbB**
**Arabellastraße 30**
**81925 München (DE)**

(54) **REFRIGERANT COMPOSITION INCLUDING HFO-1234ze (E) AND HFC-134 AND USE FOR SAME**

(57)    The present invention provides a refrigerant composition having performance such as ASHRAE non-flammability, a large refrigerating capacity, a GWP lower than that of HFC-134a, and a COP that is equal to that of HFC-134a.

   A refrigerant composition comprising HFO-1234ze(E) and HFC-134, which is for use in at least one refrigeration apparatus selected from the group consisting of refrigerators, freezers, water coolers, ice makers, refrigerating showcases, freezing showcases, freezing and refrigerating units, refrigerating machines for freezing and refrigerating warehouses, chillers (chilling units), turbo refrigerating machines, and screw refrigerating machines.

**EP 3 699 252 A1**

**Description**

Technical Field

The present invention relates to a refrigerant composition containing HFO-1234ze(E) and HFC-134 and to use of the refrigerant.

Background Art

In recent years, mixtures of fluorinated hydrocarbons such as HFC-134a (R-134a, 1,1,1,2-tetrafluoroethane, $CF_3CH_2F$), HFO-1234yf (R-1234yf, 2,3,3,3-tetrafluoropropene, $CF_3CF=CH_2$), HFO-1234ze (R-1234ze, E- or Z-1,3,3,3-tetrafluoropropene, $CF_3CH=CHF$), and HFC-227ea (R-227ea 1,1,1,2,3,3,3-heptafluoropropane, $CF_3CHFCF_3$) have been used as refrigerants for air conditioners, refrigerating machines, refrigerators, and the like.

The above fluorinated hydrocarbons are used alone or as a composition (mixture) for various applications. As the composition, compositions obtained by mixing HFC and HFO as described in Patent Literature (PTL) 1 and 2 are known.

PTL 1 discloses R513A, which is a mixed refrigerant of HFO-1234yf and HFC-134a.

PTL 2 discloses R515A, which is a mixed refrigerant of HFO-1234ze and HFC-227ea.

Citation List

Patent Literature

PTL 1: JP2017-053566A

PTL 2: US Patent Application No. 2017-029679

Summary of Invention

Technical Problem

An object of the present invention is to provide a refrigerant composition containing HFO-1234ze(E) and HFC-134 that is usable in refrigeration apparatuses, such as refrigerators, freezers, water coolers, ice makers, refrigerating showcases, freezing showcases, freezing and refrigerating units, refrigerating machines for freezing and refrigerating warehouses, chillers (chilling units), turbo refrigerating machines, and screw refrigerating machines.

Solution to Problem

Specifically, the present invention relates to a refrigerant composition containing HFO-1234ze(E) and HFC-134 and to use of the refrigerant.

Item 1. A refrigerant composition comprising HFO-1234ze(E) and HFC-134, which is for use in at least one refrigeration apparatus selected from the group consisting of refrigerators, freezers, water coolers, ice makers, refrigerating showcases, freezing showcases, freezing and refrigerating units, refrigerating machines for freezing and refrigerating warehouses, chillers (chilling units), turbo refrigerating machines, and screw refrigerating machines.

Item 2. The refrigerant composition according to Item 1, wherein HFO-1234ze(E) is contained in an amount of 1 to 64% by weight, and HFC-134 is contained in an amount of 36 to 99% by weight per 100% by weight of the total amount of HFO-1234ze(E) and HFC-134.

Item 3. The refrigerant composition according to Item 1 or 2, wherein HFO-1234ze(E) is contained in an amount of 44 to 64% by weight, and HFC-134 is contained in an amount of 36 to 56% by weight per 100% by weight of the total amount of HFO-1234ze(E) and HFC-134.

Item 4. A refrigerant composition comprising HFO-1234ze(E), HFC-134, and a third component, wherein the third component is at least one compound selected from the group consisting of HCFO-1233zd(E), HCFO-1224yd(Z), HFO-1234ze(Z), HFO-1336mzz(E), HFO-1336mzz(Z), HFO-1225ye(E), HFO-1225ye(Z), HFO-1225zc, HFC-227ca, HFC-227ea, HFC-236fa, HFC-236ea, HFC-245fa, and HFE-227me.

Item 5. The refrigerant composition according to Item 4, wherein the third component is contained in an amount of 0.2% by weight or more to 20% by weight or less per 100% by weight of the total amount of HFO-1234ze(E), HFC-134, and the third component. Item 6. The refrigerant composition according to Item 4 or 5, wherein the third component is at least one compound selected from the group consisting of HCFO-1233zd(E), HCFO-1224yd(Z), HFO-1234ze(Z), HFO-1336mzz(E), HFO-1225ye(E), HFO-1225ye(Z), and HFC-245fa.

Item 7. The refrigerant composition according to any one of Items 4 to 6, wherein HFO-1234ze(E) is contained in an amount of 44 to 64% by weight, and HFC-134 is contained in an amount of 24 to 44% by weight per 100% by weight of the total amount of HFO-1234ze(E), HFC-134, and the third component.

Item 8. The refrigerant composition according to any one of Items 1 to 7, which contains at least one material selected from the group consisting of tracers, compatibilizing agents, ultraviolet fluorescent dyes, stabilizers, and polymerization inhibitors.

Item 9. The refrigerant composition according to any one of Items 1 to 8, which is for use as an alternative for a refrigerant composition containing 1,1,1,2-tetrafluoroethane (HFC-134a) .

Item 10. A freezing method comprising a step of operating a refrigeration cycle using the refrigerant composition according to any one of Items 1 to 9.

Item 11. A refrigeration apparatus comprising the refrigerant composition according to any one of Items 1 to 9. Item 12. Use of the refrigerant composition according to Items 1 to 9 as a refrigerant.

Item 13. A composition containing the refrigerant composition according to Items 1 to 9 and a refrigerant oil.

Advantageous Effects of Invention

According to the present invention, a refrigerant composition containing HFO-1234ze(E) and HFC-134 has such effects that the composition has ASHRAE non-flammability, a large refrigerating capacity, a GWP lower than that of HFC-134a, and a COP that is equal to or higher than that of HFC-134a, and can be preferably used for at least one refrigeration apparatus selected from the group consisting of refrigerators, freezers, water coolers, ice makers, refrigerating showcases, freezing showcases, freezing and refrigerating units, refrigerating machines for freezing and refrigerating warehouses, chillers (chilling units), turbo refrigerating machines, and screw refrigerating machines.

Description of Embodiments

1. Refrigerant Composition

The refrigerant composition of the present invention contains HFO-1234ze (E) and HFC-134 as refrigerant components. The refrigerant composition of the present invention has ASHRAE non-flammability, a large refrigerating capacity, a GWP lower than that of HFC-134a, and a coefficient of performance (COP) that is equal to or higher than that of HFC-134a.

The refrigerant composition of the present invention can be preferably used for at least one refrigeration apparatus selected from the group consisting of refrigerators, freezers, water coolers, ice makers, refrigerating showcases, freezing showcases, freezing and refrigerating units, refrigerating machines for freezing and refrigerating warehouses, chillers (chilling units), turbo refrigerating machines, and screw refrigerating machines. Further, since the refrigerant has a low GWP, there is less direct effect on global warming due to direct greenhouse gas emission during refrigerant leakage, and the COP is high. Thus, an indirect effect on global warming emitted by use of electric power during operation can also be reduced, thereby comprehensively reducing global warming effects.

The present invention is roughly divided into embodiments from a first embodiment to a fourth embodiment. Each embodiment will be described in detail below. Refrigerant components (HFO-1234ze (E), HFC-134, and a third component) used in the first to fourth embodiments according to the present invention are defined in Table 1 below.

Table 1

| Refrigerant number | Composition (chemical formula) | Chemical name | Boiling point |
|---|---|---|---|
| HFO-1234ze(E) | $CF_3CF=CH_2$ | 2,3,3,3-Tetrafluoropropene | -19°C |
| HFC-134 | $CF_2HCF_2H$ | 1,1,2,2-Tetrafluoroethane | -16°C |
| HCFO-1233zd(E) | $CF_3CH=CHCl$ | Trans-1-chloro-3,3,3-trifluoropropene | 18°C |
| HCFO-1224yd(Z) | $CF_3CF=CHCl$ | Cis-1-chloro-3,3,3-trifluoropropene | 15°C |
| HFO-1234ze(Z) | $CF_3CF=CH_2$ | 2,3,3,3-Tetrafluoropropene | 10°C |
| HFO-1336mzz(E) | $CF_3CH=CHCF_3$ | Trans-1,1,1,4,4,4-hexafluoro-2-butene | 7°C |

(continued)

| Refrigerant number | Composition (chemical formula) | Chemical name | Boiling point |
|---|---|---|---|
| HFO-1336mzz(Z) | $CF_3CH=CHCF_3$ | Cis-1,1,1,4,4,4-hexafluoro-2-butene | 33°C |
| HFO-1225ye(E) | $CF_3CF=CHF$ | Trans-1,2,3,3,3-pentafluoro-1-propene | -16°C |
| HFO-1225ye (Z) | $CF_3CF=CHF$ | Cis-1,2,3,3,3-pentafluoro-1-propene | -19°C |
| HFO-1225zc | $CF_3CH=CF_2$ | 1,1,3,3,3-Pentafluoropropene | -21°C |
| HFC-227ca | $CF_3CF_2CHF_2$ | 1,1,1,2,2,3,3-Heptafluoropropane | -16°C |
| HFC-227ea | $CF_3CHFCF_3$ | 1,1,1,2,3,3,3-Heptafluoropropane | -16°C |
| HFC-236fa | $CF_3CH_2CF_3$ | 1,1,1, 3,3,3-Hexafluoropropane | -1°C |
| HFC-236ea | $CF_3CHFCHF_2$ | 1,1,1,2,3,3-Hexafluoropropane | 6°C |
| HFC-245fa | $CF_3CH_2CHF_2$ | 1,1,1,3,3-Pentafluoropropane | 15°C |
| HFE-227me | $CF_3CHFOCF_3$ | 1-Trifluoromethoxy-1,2,2,2-tetrafluoroethane | -10°C |

First Embodiment

The first embodiment is described in detail below.

The refrigerant composition according to the first embodiment of the present invention (also referred to below as "the refrigerant composition of the present invention" in the First Embodiment section) is a refrigerant composition containing HFO-1234ze(E) and HFC-134, and is used for at least one refrigeration apparatus selected from the group consisting of refrigerators, freezers, water coolers, ice makers, refrigerating showcases, freezing showcases, freezing and refrigerating units, refrigerating machines for freezing and refrigerating warehouses, chillers (chilling units), turbo refrigerating machines, and screw refrigerating machines.

The refrigerant composition of the present invention has ASHRAE non-flammability, a large refrigerating capacity, a GWP lower than that of HFC-134a, and a COP equivalent to or higher than that of HFC-134a.

Because the refrigerant composition of the present invention has a GWP of 600 or less compared to the GWP of HFC-134a, it can notably reduce the burden on the environment from a global warming perspective, compared with other general-purpose refrigerants.

The refrigerant composition of the present invention is superior in energy consumption efficiency because it has a COP that is equal to or higher than that of HFC-134a. More specifically, the refrigerant composition of the present invention preferably has a COP of 98% or more, more preferably 100% or more, and even more preferably 101% or more relative to that of HFC-134a.

The refrigerating capacity of the refrigerant composition of the present invention can replace that of HFC-134a. More specifically, the refrigerating capacity is 75% or more, preferably 78% or more, and more preferably 80% or more, relative to that of HFC-134a.

The refrigerant composition of the present invention has a lower GWP and a higher COP than those of R513A. Further, the refrigerant composition of the present invention has a higher refrigerating capacity than that of R515A. In addition, the refrigerant composition of the present invention is nonflammable and has a higher refrigerating capacity than that of R-1234ze alone.

In the refrigerant composition of the present invention, HFO-1234ze (E) is preferably contained in an amount of 1 to 64% by weight, and HFC-134 is preferably contained in an amount of 99 to 36% by weight per 100% by weight of the total amount of HFO-1234ze(E) and HFC-134.

Since the refrigerant composition of the present invention contains HFO-1234ze (E) and HFC-134 within the above ranges, it has a GWP lower than that of HFC-134a, a COP that is equal to or higher than that of HFC-134a, a large refrigerating capacity, and ASHRAE non-flammability like HFC-134a. Since the refrigerant composition of the present invention has ASHRAE non-flammability, it is safer and can be used in a wide range of applications, as compared to flammable refrigerants.

In the refrigerant composition of the present invention, HFO-1234ze (E) is more preferably contained in an amount of 44 to 64% by weight, and HFC-134 is more preferably contained in an amount of 56 to 36% by weight per 100% by weight of the total amount of HFO-1234ze(E) and HFC-134.

Since the refrigerant composition of the present invention contains HFO-1234ze (E) and HFC-134 within the above ranges, it has a GWP of 500 or less, a COP that is equal to or higher than that of HFC-134a, a large refrigerating capacity, and ASHRAE non-flammability like HFC-134a.

In the refrigerant composition of the present invention, the total amount of HFO-1234ze (E) and HFC-134 in 100% by weight of the refrigerant composition is preferably 95% by weight or more, and more preferably 99% by weight or more.

Further, the refrigerant composition of the present invention may be a composition consisting of HFO-1234ze (E) and HFC-134, or a composition consisting essentially of HFO-1234ze (E) and HFC-134.

It is preferable that the refrigerant composition of the present invention contains refrigerant components (materials having a refrigerant function), and the total amount of HFO-1234ze (E) and HFC-134 in 100% by weight of the refrigerant components is preferably 95% by weight or more. The total amount of HFO-1234ze (E) and HFC-134 is more preferably 99% by weight or more.

Further, the refrigerant composition of the present invention may contain refrigerant components (materials having a refrigerant function) and may be a composition consisting of HFO-1234ze (E), HFC-134, and a third component.

Furthermore, the refrigerant composition of the present invention may contain refrigerant components (materials having a refrigerant function) and may be a composition consisting essentially of HFO-1234ze (E), HFC-134, and a third component.

In the refrigerant composition of the present invention, the temperature glide is preferably 2°C or lower, more preferably 1°C or lower, and even more preferably 0.5°C or lower.

In the refrigerant composition of the present invention, the compressor discharge temperature is preferably 80°C or lower, and more preferably 70°C or lower.

Second Embodiment

The second embodiment of the present invention is described in detail below.

The refrigerant composition according to the second embodiment of the present invention (also referred to below as "the refrigerant composition of the present invention" in the Second Embodiment section) is a refrigerant composition containing HFO-1234ze(E), HFC-134, and a third component, and the third component is at least one component selected from the group consisting of HCFO-1233zd(E), HCFO-1224yd(Z), HFO-1234ze(Z), HFO-1336mzz(E), HFO-1336mzz(Z), HFO-1225ye(E), HFO-1225ye(Z), HFO-1225zc, HFC-227ca, HFC-227ea, HFC-236fa, HFC-236ea, HFC-245fa, and HFE-227me.

Since the refrigerant composition of the present invention contains the third component in addition to HFO-1234ze(E) and HFC-134, it has properties such as ASHRAE non-flammability, large refrigerating capacity, a GWP lower than that of HFC-134a, and a COP that is equivalent to or higher than that of HFC-134a.

Since the refrigerant composition of the present invention has a GWP lower than that of HFC-134a, it can notably reduce the burden on the environment from a global warming perspective, compared with other general-purpose refrigerants. A GWP of 500 or less is preferable because the burden on the environment can be significantly reduced.

The refrigerant composition of the present invention has superior energy consumption efficiency because it has a COP that is equal to or higher than that of HFC-134a. More specifically, the refrigerant composition of the present invention preferably has a COP of 98% or more, more preferably 100% or more, and even more preferably 101% or more, relative to that of HFC-134a. The refrigerant composition of the present invention having a COP in the above ranges is superior in that it can replace R513A.

The refrigerating capacity of the refrigerant composition of the present invention can replace that of HFC-134a. More specifically, the refrigerating capacity is 75% or more, preferably 78% or more, and more preferably 80% or more, relative to that of HFC-134a. The refrigerant composition of the present invention having a refrigerating capacity in the above ranges is superior in that it can replace R515A and R1234ze.

The refrigerant composition of the present invention has a lower GWP and a higher COP than those of R513A. Further, the refrigerant composition of the present invention has a refrigerating capacity higher than that of R515A. In addition, the refrigerant composition of the present invention is non-flammable and has a higher refrigerating capacity than that of R-1234ze alone.

In the refrigerant composition of the present invention, the temperature glide is preferably 2°C or lower, more preferably 1°C or lower, and even more preferably 0.5°C or lower.

In the refrigerant composition of the present invention, the compressor discharge temperature is preferably 80°C or lower, and more preferably 70°C or lower.

In the refrigerant composition of the present invention, from the viewpoint of attaining both high COP and non-flammability, the third component is generally contained in an amount of 0.2% by weight or more to 20% by weight or less, preferably 0.2% by weight or more to 16% by weight or less, more preferably 0.2% by weight or more to 8% by weight or less, even more preferably 0.2% by weight or more to 5% by weight or less, and particularly preferably 0.2% by weight or more to 3% by weight or less per 100% by weight of the total amount of HFO-1234ze(E), HFC-134, and the third component.

In the refrigerant composition of the present invention, from the viewpoint of attaining both low GWP and non-flammability, the third component is preferably at least one compound selected from the group consisting of HCFO-1233zd(E), HCFO-1224yd(Z), HFO-1234ze(Z), HFO-1336mzz(E), HFO-1225ye(E), HFO-1225ye(Z), and HFC-245fa. Of these third components, from the viewpoint of attaining both low GWP and non-flammability, at least one compound selected from the group consisting of HFO-1234ze(Z), HFO-1336mzz(E), HFO-1225ye(E), and HFO-1225ye(Z) is preferred.

In the refrigerant composition of the present invention, HFO-1234ze(E) is preferably contained in an amount of 44 to 64% by weight, and HFC-134 is preferably contained in an amount of 44 to 24% by weight per 100% by weight of the total amount of HFO-1234ze(E), HFC-134, and the third component.

In the refrigerant composition of the present invention, the total amount of HFO-1234ze (E), HFC-134, and the third component in 100% by weight of the refrigerant composition is preferably 95% by weight or more, and more preferably 99% by weight or more.

The refrigerant composition of the present invention is preferably a composition consisting essentially of HFO-1234ze(E), HFC-134, and the third component, and more preferably a composition consisting of HFO-1234ze(E), HFC-134, and the third component.

It is preferable that the refrigerant composition of the present invention contains refrigerant components (materials having a refrigerant function), and the total amount of HFO-1234ze (E), HFC-134, and the third component in 100% by weight of the refrigerant components is preferably 95% by weight or more. The total amount of HFO-1234ze (E), HFC-134, and the third component is more preferably 99% by weight or more.

It is preferable that the refrigerant composition of the present invention contains refrigerant components (materials having a refrigerant function), and is a composition consisting essentially of HFO-1234ze (E), HFC-134, and the third component.

It is more preferable that the refrigerant composition of the present invention contains refrigerant components (materials having a refrigerant function), and is a composition consisting of HFO-1234ze (E), HFC-134, and the third component.

Optional Additives in Refrigerant Composition according to First and Second Embodiments

The refrigerant compositions according to the first and second embodiments of the present invention (also referred to below as "the refrigerant composition of the present invention" in the Optional Additives section) may suitably contain various additives according to their purposes.

The refrigerant composition of the present invention may further contain one or more tracers. The one or more tracers are added to the refrigerant composition of the present invention at a detectable amount so that, when the refrigerant composition of the present invention is diluted, contaminated, or undergoes any other change, the change can be traced. There is no limitation on the tracers. Preferable examples include hydrofluorocarbons, deuterated hydrocarbons, deuterated hydrofluorocarbons, perfluorocarbons, fluoroethers, brominated compounds, iodinated compounds, alcohols, aldehydes, ketones, nitrous oxide ($N_2O$), and the like. Particularly preferred are hydrofluorocarbons or fluoroethers.

In the refrigerant composition of the present invention, the content of the tracer is preferably 0.01 to 5% by weight in 100% by weight of the refrigerant composition.

The refrigerant composition of the present invention may further contain a compatibilizing agent. The type of the compatibilizing agent is not limited. Preferable examples include polyoxyalkylene glycol ethers, amides, nitriles, ketones, chlorocarbons, esters, lactones, aryl ethers, fluoroethers, 1,1,1-trifluoroalkan, and the like. Particularly preferred are polyoxyalkylene glycol ethers.

In the refrigerant composition of the present invention, the content of the compatibilizing agent is preferably 0.01 to 5% by weight in 100% by weight of the refrigerant composition.

The refrigerant composition of the present invention may further contain one or more ultraviolet fluorescent dyes. There is no limitation on the ultraviolet fluorescent dyes. Preferable examples include naphthalimide, coumarin, anthracene, phenanthrene, xanthene, thioxanthene, naphthoxanthene, fluorescein, and derivatives thereof. Either naphthalimide or coumarin, or both, are particularly preferred.

In the refrigerant composition of the present invention, the content of the ultraviolet fluorescent dye is preferably 0.01 to 5% by weight in 100% by weight of the refrigerant composition.

The refrigerant composition of the present invention may further contain a stabilizer, a polymerization inhibitor, etc., if necessary.

Examples of stabilizers include, but are not limited to, aliphatic nitro compounds, such as nitromethane and nitroethane; aromatic nitro compounds, such as nitrobenzene and nitrostyrene; ethers, such as 1,4-dioxane; amines, such as 2,2,3,3,3-pentafluoropropylamine and diphenylamine; butylhydroxyxylene; benzotriazole; and the like. The stabilizers can be used singly or in a combination of two or more.

In the refrigerant composition of the present invention, the content of the stabilizer is preferably 0.01 to 5% by weight in 100% by weight of the refrigerant composition.

Examples of polymerization inhibitors include, but are not limited to, 4-methoxy-1-naphthol, hydroquinone, hydroquinonemethyl ether, dimethyl-t-butylphenol, 2,6-di-tert-butyl-p-cresol, and the like.

In the refrigerant composition of the present invention, the content of the polymerization inhibitor is preferably 0.01 to 5% in 100% by weight of the refrigerant composition.

2. Composition

The composition of the present invention contains the refrigerant composition (including optional additives) and a refrigerant oil.

The refrigerant oil is not limited and can be suitably selected from commonly used refrigerant oils. A refrigerant oil that is more excellent in terms of, for example, the effect of improving miscibility and stability with the refrigerant composition of the present invention may be appropriately selected.

Although there is no limitation, the stability of the refrigerant composition of the present invention and the composition can be evaluated by a commonly used method. Examples of such methods include an evaluation method using the amount of free fluorine ions as an index according to ASHRAE Standard 97-2007, and the like. There is, for example, another evaluation method using the total acid number as an index. This method can be performed, for example, according to ASTM D 974-06.

Preferred as the type of the refrigerant oil is, specifically, for example, at least one member selected from the group consisting of polyalkylene glycol (PAG), polyol ester (POE), and polyvinyl ether (PVE).

The refrigerant oil to be used may have, for example, a kinematic viscosity at 40°C of 5 to 400 cSt. Refrigerant oil having a kinematic viscosity within this range is preferable in terms of lubricity.

In the present specification, the unit consisting of the refrigerant components (HFO-1234ze(E), HFC-134, and the third component) and the refrigerant oil is referred to as a "refrigerant mixture," and the content of the refrigerant oil is generally 2 to 50% by weight in 100% by weight of the refrigerant mixture.

Third Embodiment

The third embodiment of the present invention is described in detail below.

Application and Use of Refrigerant Composition

The refrigerant compositions according to the first and second embodiments of the present invention (also referred to below as "the refrigerant composition of the present invention" in the Third Embodiment section) can be used in various refrigeration apparatuses. More specifically, the refrigerant composition of the present invention is suitably used in at least one refrigeration apparatus selected from the group consisting of refrigerators, freezers, water coolers, ice makers, refrigerating showcases, freezing showcases, freezing and refrigerating units, refrigerating machines for freezing and refrigerating warehouses, chillers (chilling units), turbo refrigerating machines, and screw refrigerating machines.

In the present specification, the term "refrigeration apparatus" in the broad sense refer to machines in general that draw heat from an object or space to make its temperature lower than the temperature of the ambient air, and maintain low temperature. In other words, refrigeration apparatuses in the broad sense refer to conversion machines that gain energy from the outside to do work, and that perform energy conversion, in order to transfer heat from where the temperature is lower to where the temperature is higher.

In the present invention, the refrigeration apparatus is not limited, and examples include refrigerators, freezers, water coolers, ice makers, refrigerating showcases, freezing showcases, freezing and refrigerating units, refrigerating machines for freezing and refrigerating warehouses, chillers (chilling units), turbo refrigerating machines, and screw refrigerating machines.

In the present invention, the term "chiller (chilling unit)" refers to a system that comprises a refrigerating machine containing a refrigerant, and a circuit for circulating water or antifreeze liquid, and that performs heat exchange with a cooler.

Further, in the present invention, the term "turbo refrigerating machine" refers to a refrigerating machine that is a type of large chiller refrigerating machine, and that has a refrigeration cycle in which heat exchange is performed by an evaporator using a liquid refrigerant, the evaporated refrigerant gas is absorbed by a centrifugal compressor, the adiabatically compressed refrigerant gas is cooled and liquefied with a condenser, the liquefied refrigerant is adiabatically expanded by passing it through an expansion valve, and then the refrigerant is supplied again in the form of a liquid to the evaporator. The term "large chiller refrigerating machine" refers to a large air-conditioning apparatus that is a type of chiller and is intended for air conditioning in a unit of a building.

Examples of refrigerating machines include, but are not limited to, a wide range of vapor-compression refrigerating machines, vapor-jet refrigerating machines, air-cycle refrigerating machines, and the like. Typical examples include vapor-compression refrigerating machines.

Refrigeration apparatuses that can use the refrigerant composition of the present invention are preferably employed for professional uses (including, for example, industrial, experimental, and transportation applications).

In particular, the refrigerant composition of the present invention is suitably used for chillers (chilling units), turbo refrigerating machines, and screw refrigerating machines.

The refrigerant composition of the present invention can be used as an alternative for a refrigerant composition containing 1,1,1,2-tetrafluoroethane (HFC-134a). More specifically, in a freezing method comprising a step of operating a refrigeration cycle using HFC-134a, the refrigerant composition of the present invention can be used in place of HFC-134a.

Further, the refrigerant composition of the present invention can be used as an alternative for a refrigerant composition containing 1,1,1,2-tetrafluoroethane (HFC-134a) alone as a refrigerant component.

The refrigerant composition of the present invention is suitably used as a refrigerant containing HFO-1234ze(E) in an amount of 1 to 64% by weight, and HFC-134 in an amount of 99 to 36% by weight per 100% by weight of the total amount of HFO-1234ze(E) and HFC-134 in the refrigerant composition.

The refrigerant composition of the present invention is also suitably used as a refrigerant containing HFO-1234ze(E) in an amount of 44 to 64% by weight, and HFC-134 in an amount of 56 to 36% by weight per 100% by weight of the total amount of HFO-1234ze(E) and HFC-134 in the refrigerant composition.

Fourth Embodiment

The fourth embodiment of the present invention is described in detail below.

Freezing Method

The freezing method of the present invention comprises the step of operating a refrigeration cycle using the refrigerant compositions according to the first and second embodiments of the present invention (also referred to below as the "refrigerant composition of the present invention" in the Fourth Embodiment section).

Examples of refrigeration cycles mainly include vapor-compression refrigeration cycles, vapor-jet refrigeration cycles, vapor-absorption refrigeration cycles, and the like. The refrigerant composition of the present invention is suitable for use in vapor-compression refrigeration cycles, but is not limited to this.

A vapor-compression refrigeration cycle comprises a series of cycles of (1) compressing a refrigerant in a gaseous state in a compressor, (2) cooling the refrigerant to convert it into a high-pressure liquid state in a condenser, (3) reducing the pressure with an expansion valve, and (4) evaporating the liquid refrigerant at a low temperature in an evaporator and removing heat by the heat of evaporation. Depending on the system of compressing gaseous refrigerants, vapor-compression refrigeration cycles can be classified into a turbo (centrifugal) cycle, a reciprocating cycle, a twin-screw cycle, a single-screw cycle, a scroll compressor cycle, etc., and can be selected according to heat capacity, compression ratio, and size. The refrigerant composition of the present invention is suitable as a refrigerant used for large chiller refrigerating machines, and particularly turbo (centrifugal) compressors, although it is not limited to these.

Examples

The present invention is described in more detail below with reference to Examples and Comparative Examples. However, the present invention is not limited to the Examples.

Examples 1 to 11 and Comparative Examples 1 to 4

The GWP of compositions in the Examples and Comparative Examples was evaluated based on the values stated in the Intergovernmental Panel on Climate Change (IPCC), fourth report.

The COP and the refrigerating capacity of compositions in the Examples and Comparative Examples were determined by performing theoretical refrigeration cycle calculations for the refrigerants and mixed refrigerants using the National Institute of Science and Technology (NIST) and Reference Fluid Thermodynamic and Transport Properties Database (Refprop 9.0) under the following conditions.

Evaporating temperature: 0°C
Condensation temperature: 45°C
Superheating temperature: 5 K
Subcooling temperature: 0 K

Compressor efficiency: 70%

Tables 2 and 3 show the GWP, COP, and refrigerating capacity calculated based on the results. The COP and the refrigerating capacity are ratios relative to R134a.

The coefficient of performance (COP) was determined by the following formula.

```
COP = (refrigerating capacity or heating capacity)/power

consumption
```

The flammability of the compositions of the Examples and Comparative Examples were evaluated according to the US ASHRAE Standard 34-2013.

A 12-L spherical glass flask was used so that the combustion state could be visually observed and photographically recorded. When excessive pressure was generated by combustion in the glass flask, gas was allowed to escape from the upper lid. Ignition was achieved by electric discharge from electrodes disposed at one-third the distance from the bottom.

Test Conditions

Test vessel: 280-mm-dia. spherical (internal volume: 12 liters)
Test temperature: 60°C $\pm$3°C
Pressure: 101.3 kPa $\pm$0.7 kPa
Water: 0.0088 g$\pm$0.0005 g per gram of dry air
Mixing ratio of composition/air: 1 vol.% increments $\pm$0.2 vol.%
Composition mixture: $\pm$0.1 wt%
Ignition method: AC discharge, voltage: 15 kV, electric current:
30 mA, neon transformer
Electrode spacing: 6.4 mm (1/4 inch)
Spark: 0.4 seconds $\pm$0.05 seconds

Evaluation criteria:

- When the flame propagation extended at an angle of 90° or more from the ignition point, it was evaluated as having flame propagation (flammable).
- When the flame propagation extended at an angle of less than 90° from the ignition point, it was evaluated as having no flame propagation (non-flammable).

Table 2

| Item | | Unit | R134a | Comparative Example 1 (R513A) | Comparative Example 2 (R515A) | Comparative Example 3 (R1234ze) | Comparative Example 4 | Example 1 | Example 2 | Example 3 |
|---|---|---|---|---|---|---|---|---|---|---|
| Composition | HFO-1234ze (E) | % by weight | | | 88 | 100 | 70 | 62 | 55 | 46 |
| | HFC-134 | % by weight | | | | | 30 | 38 | 45 | 54 |
| | Others | - | | HF01234yf /HFC134a | R227ea | | | | | |
| | Amount of other components | % by weight | | 56/44 | 12 | | | | | |
| GWP | | - | 1430 | 631 | 392 | 6 | 334 | 422 | 498 | 597 |
| Coefficient of performance (COP) | | % (relative to R134a) | 100 | 96 | 99 | 100 | 101 | 101 | 101 | 102 |
| Refrigerating capacity | | % (relative to R134a) | 100 | 100 | 73 | 74 | 79 | 80 | 81 | 82 |
| Compressor discharge temperature | | °C | 66 | 60 | 57 | 58 | 61 | 61 | 62 | 63 |
| Discharge pressure | | MPa | 1.16 | 1.21 | 0.88 | 0.88 | 0.92 | 0.93 | 0.94 | 0.94 |
| Condensation glide | | K | 0 | 0 | 0 | 0 | 0.11 | 0.09 | 0.06 | 0.03 |
| Evaporation glide | | K | 0 | 0.01 | 0 | 0 | 0.06 | 0.04 | 0.03 | 0.01 |
| Flammability | | - | Non-flammable | Non-flammable | Non-flammable | Flammable | Flammable | Non-flammable | Non-flammable | Non-flammable |

Table 3

| Item | | Unit | Example 4 | Example 5 | Example 6 | Example 7 | Example 8 | Example 9 | Example 10 | Example 11 |
|---|---|---|---|---|---|---|---|---|---|---|---|
| Composition | HFO-1234ze (E) | % by weight | 50 | 55 | 63 | 63 | 63 | 63 | 63 | 63 |
| | HFC-134 | % by weight | 35 | 38 | 35 | 35 | 35 | 35 | 35 | 35 |
| | Others | - | R1225ye | R1225ye | R1233zd | R1224yd | R1336mzz (E) | R1336mzz (Z) | R1234ze(Z) | R245fa |
| | Amount of other components | % by weight | 15 | 7 | 2 | 2 | 2 | 2 | 2 | 2 |
| GWP | | - | 388 | 421 | 394 | 389 | 389 | 389 | 389 | 409 |
| Coefficient of performance (COP) | | % (relative to R134A) | 100 | 101 | 101 | 101 | 101 | 101 | 101 | 101 |
| Refrigerating capacity | | % (relative to R134A) | 81 | 81 | 78 | 79 | 79 | 77 | 79 | 78 |
| Compressor discharge temperature | | °C | 61 | 61 | 62 | 61 | 61 | 62 | 61 | 61 |
| Discharge pressure | | MPa | 0.94 | 0.94 | 0.9 | 0.91 | 0.92 | 0.90 | 0.91 | 0.91 |
| Condensation glide | | K | 0.09 | 0.09 | 0.97 | 0.45 | 0.34 | 1.10 | 0.43 | 0.51 |
| Evaporation glide | | K | 0.07 | 0.06 | 1.02 | 0.41 | 0.32 | 1.25 | 0.39 | 0.54 |
| Flammability | | - | Non-flammable | Non-flammable | Non-flammable | Non-flammable | Non-flammable | Non-flammable | Non-flammable | Non-flammable |

In Table 3, R1233zd, R1224yd(Z), R1336mzz(E), R1336mzz(Z), and R245fa respectively mean HCFO-1233zd(E), HCFO-1224yd(Z), HFO-1336mzz(E), HFO-1336mzz(Z), and HFC-245fa.

Examples 1 to 11 had ASHRAE non-flammability, a large refrigerating capacity, a low GWP, and a high COP.

Comparative Example 1 (R513A) had a GWP of 600 or more and a COP of 96%, relative to those of R-134a.

Comparative Example 2 (R515A) had a COP of 99% and a refrigerating capacity of 73%, relative to those of R-134a.

Comparative Example 3 (R1234ze) and Comparative Example 4 were flammable.

**Claims**

1. A refrigerant composition comprising HFO-1234ze(E) and HFC-134, which is for use in at least one refrigeration apparatus selected from the group consisting of refrigerators, freezers, water coolers, ice makers, refrigerating showcases, freezing showcases, freezing and refrigerating units, refrigerating machines for freezing and refrigerating warehouses, chillers (chilling units), turbo refrigerating machines, and screw refrigerating machines.

2. The refrigerant composition according to claim 1, wherein HFO-1234ze(E) is contained in an amount of 1 to 64% by weight, and HFC-134 is contained in an amount of 36 to 99% by weight per 100% by weight of the total amount of HFO-1234ze(E) and HFC-134.

3. The refrigerant composition according to claim 1 or 2, wherein HFO-1234ze(E) is contained in an amount of 44 to 64% by weight, and HFC-134 is contained in an amount of 36 to 56% by weight per 100% by weight of the total amount of HFO-1234ze(E) and HFC-134.

4. A refrigerant composition comprising HFO-1234ze(E), HFC-134, and a third component, wherein the third component is at least one compound selected from the group consisting of HCFO-1233zd(E), HCFO-1224yd(Z), HFO-1234ze(Z), HFO-1336mzz(E), HFO-1336mzz(Z), HFO-1225ye(E), HFO-1225ye(Z), HFO-1225zc, HFC-227ca, HFC-227ea, HFC-236fa, HFC-236ea, HFC-245fa, and HFE-227me.

5. The refrigerant composition according to claim 4, wherein the third component is contained in an amount of 0.2% by weight or more to 20% by weight or less per 100% by weight of the total amount of HFO-1234ze(E), HFC-134, and the third component.

6. The refrigerant composition according to claim 4 or 5, wherein the third component is at least one compound selected from the group consisting of HCFO-1233zd(E), HCFO-1224yd(Z), HFO-1234ze(Z), HFO-1336mzz(E), HFO-1225ye(E), HFO-1225ye(Z), and HFC-245fa.

7. The refrigerant composition according to any one of claims 4 to 6, wherein HFO-1234ze(E) is contained in an amount of 44 to 64% by weight, and HFC-134 is contained in an amount of 24 to 44% by weight per 100% by weight of the total amount of HFO-1234ze(E), HFC-134, and the third component.

8. The refrigerant composition according to any one of claims 1 to 7, which contains at least one material selected from the group consisting of tracers, compatibilizing agents, ultraviolet fluorescent dyes, stabilizers, and polymerization inhibitors.

9. The refrigerant composition according to any one of claims 1 to 8, which is for use as an alternative for a refrigerant composition containing 1,1,1,2-tetrafluoroethane (HFC-134a).

10. A freezing method using the refrigerant composition according to any one of claims 1 to 9.

11. A refrigeration apparatus comprising the refrigerant composition according to any one of claims 1 to 9.

12. Use of the refrigerant composition according to claims 1 to 9 as a refrigerant.

13. A composition containing the refrigerant composition according to claims 1 to 9 and a refrigerant oil.

<div align="center">

**INTERNATIONAL SEARCH REPORT**

</div>

| | International application No. |
|---|---|
| | PCT/JP2018/038350 |

**A. CLASSIFICATION OF SUBJECT MATTER**
Int.Cl. C09K5/04(2006.01)i, F25B1/00(2006.01)i

According to International Patent Classification (IPC) or to both national classification and IPC

**B. FIELDS SEARCHED**

Minimum documentation searched (classification system followed by classification symbols)
Int.Cl. C09K5/04, F25B1/00

| Documentation searched other than minimum documentation to the extent that such documents are included in the fields searched | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)
JSTPlus/JMEDPlus/JST7580 (JDreamIII) キーワード: HFO-1234ze(E), HFC-134 及びそれに類する用語

**C. DOCUMENTS CONSIDERED TO BE RELEVANT**

| Category* | Citation of document, with indication, where appropriate, of the relevant passages | Relevant to claim No. |
|---|---|---|
| X | JP 2015-517009 A (ARKEMA FRANCE) 18 June 2015, claims, paragraphs [0039]-[0126], examples 2-3, etc. & US 2015/0096312 A1 claims, paragraphs [0042]-[0192], examples 2-3, etc. & WO 2013/150225 A1 & EP 2834316 A1 & CN 104220553 A | 1-13 |
| X | JP 2017-504744 A (THE CHEMOURS COMPANY FC, LLC) 09 February 2017, claims, paragraphs [0008]-[0156], table 7, example 5, etc. & US 2016/0290175 A1 claims, paragraphs [0010]-[0174], table 7, example 5, etc. & WO 2015/077570 A1 & EP 3071664 A1 & CN 105899638 A | 1-13 |

☒ Further documents are listed in the continuation of Box C. ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 20 November 2018 (20.11.2018) | 04 December 2018 (04.12.2018) |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

International application No.

PCT/JP2018/038350

C (Continuation).    DOCUMENTS CONSIDERED TO BE RELEVANT

| Category* | Citation of document, with indication, where appropriate, of the relevant passages | Relevant to claim No. |
|---|---|---|
| X | JP 2017-503907 A (ARKEMA INC.) 02 February 2017, claims, paragraphs [0012]-[0038], tables 1-2, examples & US 2017/0174966 A1 claims, paragraphs [0012]-[0037], tables 1-2, examples & WO 2015/077134 A1 & EP 3074500 A1 & CN 105765050 A | 1-13 |
| X | JP 2016-539208 A (THE CHEMOURS COMPANY FC, LLC) 15 December 2016, claims, paragraphs [0009]-[0182], tables 11-12, example 5, etc. & US 2016/0244651 A1 claims, paragraphs [0011]-[0173], tables 11-12, example 5, etc. & WO 2015/054110 A1 & EP 3055379 A1 | 1-13 |
| X | JP 2016-65206 A (DAIKIN INDUSTRIES, LTD.) 28 April 2016, claims, paragraph [0069], table 10, example 5, etc. & US 2016/0222267 A1 claims, paragraph [0110], table 10, example 5, etc. & WO 2016/047206 A1 & EP 3023472 A1 & CN 106459733 A | 1, 9-13 |
| A | JP 2014-514423 A (HONEYWELL INTERNATIONAL, INC.) 19 June 2014, claims, examples, etc. & US 2005/0090698 A1 claims, examples, etc. & WO 2005/108523 A1 & EP 1716216 A2 | 1-13 |
| A | JP 2011-520016 A (E. I. DU PONT DE NEMOURS AND COMPANY) 14 July 2011, claims, examples, etc. & US 2009/0278075 A1 claims, examples, etc. & EP 2271724 A1 & CN 102015956 A | 1-13 |
| A | JP 2013-544896 A (ARKEMA FRANCE) 19 December 2013, claims, examples, etc. & US 2013/0105724 A1 claims, examples, etc. & EP 2590916 A2 & CN 107254296 A | 1-13 |
| A | JP 2008-524433 A (HONEYWELL INTERNATIONAL, INC.) 10 July 2008, claims, examples, etc. & US 2008/0157022 A1 claims, examples, etc. & EP 1846534 A2 & CN 101155892 A | 1-13 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017053566 A

- US 2017029679 A